(19) Europäisches Patentamt

European Patent Office

Office européen des brevets

(11) Veröffentlichungsnummer : **0 069 215**
**B1**

(12) **EUROPÄISCHE PATENTSCHRIFT**

(45) Veröffentlichungstag der Patentschrift :
13.03.85

(21) Anmeldenummer : **82104028.4**

(22) Anmeldetag : **08.05.82**

(51) Int. Cl.⁴ : **F 16 H 57/02, H 02 K 7/116**

(54) Getriebe.

(30) Priorität : 07.07.81 DE 3126688

(43) Veröffentlichungstag der Anmeldung :
12.01.83 Patentblatt 83/02

(45) Bekanntmachung des Hinweises auf die Patenterteilung : 13.03.85 Patentblatt 85/11

(84) Benannte Vertragsstaaten :
AT BE CH DE FR GB IT LI LU NL SE

(56) Entgegenhaltungen :
DE-A- 1 650 836
DE-B- 1 032 635
DE-C- 591 653
DE-C- 648 546
DE-C- 856 395
A. Meier: Kraftfahrzeuggetriebe, Zahnradfabrik, Friedrichshafen AG, 1963, S. 52

(73) Patentinhaber : Getriebebau-NORD Schlicht +
Küchenmeister GmbH & Co.
Rudolf-Diesel-Strasse 1
D-2072 Bargteheide (DE)

(72) Erfinder : Hofmann, Edwin
Timm Kröger Weg
D-2060 Bad Oldesloe (DE)

(74) Vertreter : Glawe, Delfs, Moll & Partner Patentanwälte
Postfach 26 01 62 Liebherrstrasse 20
D-8000 München 26 (DE)

### Beschreibung

Die Erfindung bezieht sich auf ein Getriebe mit einem Gehäuse, das einen Gehäusekasten mit einer Montageöffnung und einen diese schließenden Gehäusedeckel umfaßt, mit einer ein Zahnrad tragenden Getriebewelle, mit einem am Getriebegehäuse zwischen dem Zahnrad und dem Gehäusedeckel angeordneten Lager für die Getriebewelle, mit einer im Verhältnis zu einer Bohrung des Gehäusedeckels zentrierten und durch diese Bohrung in den Getriebekasten hineinragenden Deckelwelle, die ein mit dem Zahnrad zusammenwirkendes Ritzel trägt, und mit Paßeinrichtungen zur Sicherung des genauen Abstandes zwischen der Deckelwelle und der Getriebewelle.

Bei Getrieben, mit denen auf der Deckelseite des Getriebes ein Flanschmotor verbunden ist, dessen Wellenritzel zusammenwirkt mit einem Zahnrad, das innerhalb des Getriebes auf der Deckelseite gelagert ist, findet sich in der Praxis am häufigsten die Anordnung gemäß DE-C-879 943, bei welcher das deckelseitige Lager der Zahnradwelle im Gehäusedeckel angeordnet ist, wobei der Flanschmotor durch zu seiner Welle konzentrischen Paßfläche gegenüber dem Gehäusedeckel zentriert ist. Dadurch erhält man eine sichere örtliche Zuordnung des Ritzels zum Zahnrad, sofern die für die Zahnradwelle im Gehäusedeckel vorgesehene Lagerbohrung genau mit der entsprechenden Lagerbohrung im Gehäusekasten fluchtet. Dies wird dadurch erreicht, daß der Deckel und der Gehäusekasten mit zusammenwirkenden Paßflächen sowie mit Paßstiften zur Fixierung der Winkellage versehen sind. Außer den für die Zentrierung des Motors am Gehäusedeckel vorgesehenen Paßflächen und den Lagerbohrungen sind demnach am Gehäusekasten und am Gehäusedeckel je eine Paßfläche, zusätzliche Paßbohrungen mit Paßstiften notwendig und müssen die Paßflächen an Deckel und Gehäusekasten maßgenau auf die Lage der Lagerbohrungen abgestimmt werden. Dies ist aufwendig.

Geringeren Herstellungsaufwand verlangt das Getriebe nach der DE-B-1 032 635, bei dem die Zahnradwelle fliegend in Gehäuse gelagert ist. Jedoch hat dies den Nachteil, daß die Wellenlager stärker dimensioniert werden müssen infolge ihrer ungünstigeren Lage.

Schließlich ist aus der DE-C-59 16 53 ein Getriebe bekannt, bei dem das deckelseitige Lager der Zahnradwelle nicht im Deckel, sondern in einem besonderen Gehäusevorsprung angeordnet ist. Dadurch entfällt zwar die Abhängigkeit der fluchtenden Lage der beiden Wellenlager von der Zentrierung des Deckels gegenüber dem Gehäusekasten ; dennoch ist eine sorgfältige Zentrierung dieser beiden Teile zueinander notwendig, weil davon die Eingriffsgenauigkeit abhängt. Bei dem bekannten Getriebe löst man dieses Problem dadurch, daß die an Deckel und Gehäusekasten zusammenwirkenden Paßflächen exzentrisch zu der im Deckel gelagerten Welle ausgeführt werden, so daß man durch Drehung des Deckels gegenüber dem Gehäusekasten den Abstand dieser Welle von der damit zusammenwirkenden Zahnradwelle ändern und den Zahnradeingriff einstellen kann. Zwar wird damit eine genaue maßliche Abstimmung dieser Paßflächen auf die Lage der Lagerbohrungen der Zahnradwelle und der Deckelwelle unnötig ; jedoch bevorzugt man heute eine Anordnung, bei der der maßgenaue Zahnradeingriff ohne komplizierte und ggf. auch fehleranfällige Einstellung gewährleistet ist.

Der Erfindung liegt daher die Aufgabe zugrunde, ein Getriebe der eingangs genannten Art zu schaffen, das geringen Aufwand für die Herstellung der Paßeinrichtungen zwischen Getriebekasten und Getriebedeckel verlangt, die für die Eingriffsgenauigkeit der Zahnräder verantwortlich sind.

Die erfindungsgemäße Lösung besteht darin, daß die Paßeinrichtungen von zu dem Lager konzentrischen Rotationsflächen gebildet sind.

Für die Anordnung des Lagers am Gehäusekasten ist zweckmäßigerweise ein mit dem Gehäusekasten einstückig verbundener Lagerbock vorgesehen.

Die lagerseitige, als Rotationsfläche ausgebildete Paßfläche wird zweckmäßigerweise von einer an der Bildung des Lagers selbst funktionell beteiligten Fläche gebildet, weil diese ohnehin paßgenau vorhanden ist und daher kein zusätzlicher Bearbeitungsaufwand für eine weitere Paßfläche anfällt. Beispielsweise kann für diese Zwecke die Außenfläche eines Kugellagerrings oder eine einen Lagerring aufnehmende Bohrung herangezogen werden. Entsprechend ist am Deckel eine den Lagerring umfassende Bohrung bzw. ein in die Bohrung eingreifender Ansatz vorgesehen.

Zwar ist es bekannt, einen Getriebedeckel zu einer eine Bohrung im Deckel durchsetzenden Welle dadurch zu zentrieren, daß an dem Deckel Paßflächen vorgesehen werden, die konzentrisch zu der Bohrung liegen und mit einem der Welle zugehörigen Kugellagerring zusammenwirken (A. Maier : Kraftfahrzeuggetriebe, Zahnradfabrik Friedrichshafen AG, 1963) ; jedoch konnte dadurch die alleinige Verwendung einer solchen Paßeinrichtung zur Sicherung des genauen Abstandes zwischen einer Deckelwelle und einer Getriebewelle nicht nahegelegt werden.

Die durch die Erfindung bewirkte Vereinfachung beruht darauf, daß die zur Zentrierung des Deckels gegenüber dem Gehäusekasten erforderlichen Paßflächen am Gehäuse bei der Herstellung der Lagerbohrungen ohne weiteres mit anfallen und daß eine winkelmäßige Festlegung des Deckels zum Gehäuse ganz entbehrlich wird. Dies liegt daran, daß durch die Verwendung von Paßflächen, die zu der Gehäuselagerbohrung konzentrisch sind, der Wellenabstand vollständig festgelegt ist und durch eine Änderung der Winkellage des Deckels zu dem Gehäuse nicht mehr beeinflußt werden kann.

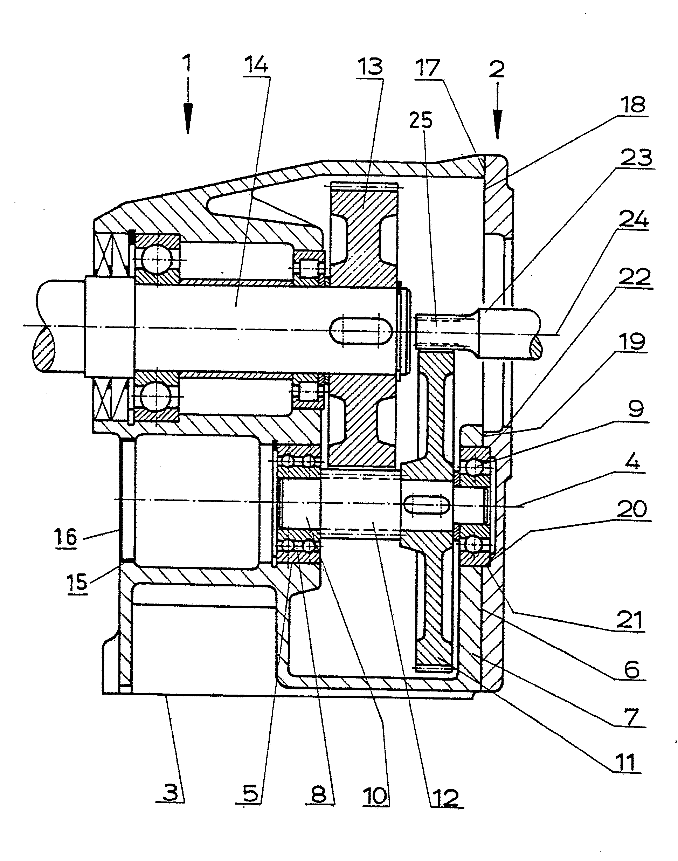

Die Erfindung wird im folgenden näher unter Bezugnahme auf die Zeichnung erläutert, die in einer einzigen Figur einen vertikalen Längsschnitt durch das Getriebe zeigt.

Das Getriebegehäuse wird gebildet von dem nach rechts unten schraffierten Gehäusekasten 1 und dem nach rechts oben schraffierten Gehäusedeckel 2, der die Montageöffnung des Getriebekastens schließt. Das Getriebegehäuse hat eine Fußfläche 3 mit nicht dargestellten Verankerungseinrichtungen. In bezug auf die Getriebewellenachse 4 enthält es eine deckelferne Lagerbohrung 5 und eine deckelseitige Lagerbohrung 6, welche in einem Wandteil 7 gebildet ist, der in dieser Beschreibung auch als Lagerbock bezeichnet wird, wobei dieser Ausdruck keinerlei beschränkende Aussage bezüglich der Form dieses Teils beinhaltet. Die Bohrungen 5 und 6 können auf ein und derselben Maschine ohne Umspannen des Werkstücks hergestellt werden. Es besteht daher Gewähr für ihre fluchtende Lage.

In den Lagerbohrungen 5, 6 befinden sich Wälzlager 8, 9 zur Lagerung einer Getriebewelle 10, die deckelseitig ein Zahnrad 11 sowie ein Ritzel 12 trägt, welches mit einem Zahnrad 13 auf einer Abtriebswelle 14 kämmt. Eine Bohrung 15 in der deckelabgewandten Seite des Gehäusekastens gibt nach der Entfernung eines Verschlußdeckels 16 den Zugang zur Getriebewelle 12 frei und ermöglicht deren Montage.

Die deckelseitige Stirnflächen 17 der Gehäusekastenwände bilden eine plane Dichtungsfläche zum Zusammenwirken mit der entsprechenden Dichtungsfläche 18 des Gehäusedeckels 2. In der Ebene dieser Fläche oder wenig davon entfernt befindet sich die deckelseitige Stirnfläche 19 des Lagerbocks 7.

Der äußere Lagerring des Wälzlagers 9 ragt deckelseitig über die Flächen 17 und 19 derart hinaus, daß der freiliegende Teil 20 seines Außenumfangs eine Paßfläche zur Zentrierung des Deckels bildet, der zu diesem Zweck mit einer passenden Bohrung 21 versehen ist.

Der Deckel 2 enthält eine Paßbohrung 22 zum Zentrieren eines in der Zeichnung nicht ersichtlichen Flanschmotors, dessen Welle 23 als sogenannte Deckelwelle in das Getriebegehäuse hineinragt und ein Ritzel 25 trägt, das mit dem Zahnrad 11 zusammenwirkt.

Die Eingriffsqualität des Ritzels 25 in bezug auf das Zahnrad 11 wird nur durch den Abstand der zugehörigen Achsen 4 und 24 und damit durch den Mittenabstand der Paßbohrungen 21 und 22 bestimmt. Die Winkellage des Deckels 2 in bezug auf die Rotationsachse 4 ist für die Eingriffsqualität ohne Belang. Es ist daher bei dieser Konstruktion nicht erforderlich, die Lage des Deckels 2 in bezug auf den Gehäusekasten 1 in jeder Hinsicht genau durch Paßstifte festzulegen ; es genügt vielmehr die Zentrierung des Deckels 2 in bezug auf die Rotationsachse 4. Diese Zentrierung wird durch die mit dem Außenring des Lagers 9 zusammenwirkende Bohrung 21 des Deckels auf einfachste Weise erzielt. Außerdem wird durch die Anordnung des Lagers 9 in dem im Gehäusekasten angeordneten Lagerbock 7 die Lagerungsqualität der Welle 10 unabhängig von der Lage des Deckels 2.

**Ansprüche**

1. Getriebe mit einem Gehäuse, das einen Gehäusekasten (1) mit einer Montageöffnung und einen diese schließenden Gehäusedeckel (2) umfaßt, mit einer ein Zahnrad (11) tragenden Getriebewelle (10), mit einem am Getriebegehäuse zwischen dem Zahnrad (11) und dem Gehäusedeckel (2) angeordneten Lager (9) für die Getriebewelle, mit einer im Verhältnis zu einer Bohrung (22) des Gehäusedeckels (2) zentrierten und durch diese Bohrung (22) in den Getriebekasten hineinragenden Deckelwelle (23), die ein mit dem ersten Zahnrad (11) zusammenwirkendes Ritzel (25) trägt, und mit Paßeinrichtungen zur Sicherung des genauen Abstandes zwischen der Deckelwelle (23) und der Getriebewelle (4), dadurch gekennzeichnet, daß die Paßeinrichtungen von zu dem Lager (9) konzentrischen Rotationsflächen (20, 21) gebildet sind.

2. Getriebe nach Anspruch 1, dadurch gekennzeichnet, daß ein Lagerbock (7) für das Lager (9) einstückig an dem Gehäusekasten (1) vorgesehen ist.

3. Getriebe nach Anspruch 1 oder 2, dadurch gekennzeichnet, daß die lagerseitige Paß-Rotationsfläche von einer an der Bildung des Lagers funktionell beteiligten Fläche gebildet ist.

**Claims**

1. A gear unit with a housing which comprises a housing case (1) with an assembly opening and a housing cover (2) closing the latter, with a transmission shaft (10) carrying a gearwheel (11), with a bearing (9) for the transmission shaft arranged on the gear unit housing between the gearwheel (11) and the housing cover (2), with a « cover » shaft (23) centered in relation to a bore (22) of the housing cover (2) and projecting through this bore (22) into the gear unit housing, which « cover » shaft carries a pinion (25) cooperating with the first gearwheel (11), and with locating means for ensuring accurate spacing between the « cover » shaft (23) and the transmission shaft (4), characterised in that the locating means are formed by surfaces of rotation (20, 21) concentric with the bearing (9).

2. A gear unit according to Claim 1, characterised in that a bearing block (7) for the bearing (9) is provided in one piece on the housing case (1).

3. A gear unit according to Claim 1 or 2, characterised in that the locating surface of rotation on the bearing side is formed by a surface participating functionally in the formation of the bearing.

## Revendications

1. Boîte de transmission, comportant un carter qui comprend une boîte de carter (1) munie d'une ouverture de montage et un couvercle de carter (2) fermant celle-ci, un arbre de transmission intermédiaire (10) qui porte une roue dentée (11), un roulement (9) pour l'arbre de transmission intermédiaire, monté sur la boîte de carter entre la roue dentée (11) et le couvercle de carter (2), un arbre de couvercle (23) qui, centré par rapport à une forure (22) du couvercle de carter (2) et pénétrant dans la boîte de carter à travers cette forure (22), porte un pignon (25) coopérant avec la première roue dentée (11), et des dispositifs d'ajustage pour déterminer et maintenir la distance exacte entre l'arbre de couvercle (23) et l'arbre de transmission intermédiaire (4), caractérisée en ce que les dispositifs d'ajustage sont constitués par des surfaces de révolution (20, 21) concentriques par rapport au roulement (9).

2. Boîte de transmission selon la revendication 1, caractérisée en ce qu'il est prévu, pour le roulement (9), un support (7) formé d'un seul tenant avec la boîte de carter (1).

3. Boîte de transmission selon la revendication 1 ou 2, caractérisée en ce que la surface de révolution d'ajustage du côté du support est constituée par une surface qui participe fonctionnellement à la formation du support.